(19) Europäisches Patentamt
European Patent Office
Office européen des brevets

(11) **EP 4 186 931 A1**

(12) **EUROPEAN PATENT APPLICATION**

(43) Date of publication:
**31.05.2023 Bulletin 2023/22**

(21) Application number: **22210087.7**

(22) Date of filing: **29.11.2022**

(51) International Patent Classification (IPC):
**C08F 210/06** (2006.01)   **C08L 23/12** (2006.01)

(52) Cooperative Patent Classification (CPC):
(C-Sets available)
**C08F 210/06; C08L 23/10**   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 KR 20210168086**

(71) Applicant: **Hanwha TotalEnergies Petrochemical
Co., Ltd.
Seosan-si, Chungcheongnam-do 31900 (KR)**

(72) Inventors:
• **PARK, Daeho**
  **31900 Chungcheongnam-do (KR)**
• **LEE, Youngjoo**
  **31900 Chungcheongnam-do (KR)**
• **CHUN, YongSung**
  **31900 Chungcheongnam-do (KR)**
• **KIM, SungHyun**
  **31900 Chungcheongnam-do (KR)**

(74) Representative: **HGF
HGF Limited
1 City Walk
Leeds LS11 9DX (GB)**

(54) **POLYPROPYLENE RESIN COMPOSITION WITH HIGH FLOWABILITY AND ARTICLE MOLDED THEREFROM**

(57)   The present invention relates to a polypropylene resin composition with high flowability and to an article molded therefrom. The polypropylene resin composition according to the embodiment of the present invention is excellent in moldability since it has high flowability. The molded article prepared therefrom has an excellent balance between rigidity and impact resistance and a small release amount of volatile organic compounds. Thus, it can be advantageously used as an automobile interior or exterior part.

[Fig. 1]

EP 4 186 931 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/651;**
**C08F 210/06, C08F 4/6543;**
**C08L 23/10, C08L 23/16;**
C08F 210/06, C08F 210/16, C08F 2500/12,
C08F 2500/27, C08F 2500/30, C08F 2500/31,
C08F 2500/35

## Description

## Technical Field

The present invention relates to a polypropylene resin composition with high flowability and to an article molded therefrom. Specifically, the present invention relates to a polypropylene resin composition prepared in the presence of a catalyst based on an ether-based internal electron donor and having excellent moldability thanks to high flowability and to a polypropylene resin article molded from the polypropylene resin composition and having an excellent balance between rigidity and impact resistance and a small release amount of volatile organic compounds.

## Background Art of the Invention

A polypropylene resin, which is one of the general-purpose resins, is not only inexpensive but also excellent in mechanical properties, moldability, and chemical resistance. Thus, it is widely used as a material for automobile interior and exterior parts, electronic and household appliance parts, construction and industrial supplies, films, pipes, power cables, and the like.

Specifically, attempts have been made to use articles prepared by injection molding a polypropylene-based resin as automobile interior and exterior parts. In such an event, the fuel efficiency of the automobiles can be improved due to the lightweight of the parts. In addition, polypropylene resins have an advantage in that they not only can lower the manufacturing cost of articles since they are cheaper than other resins, but also are easy to recycle.

Polypropylene-based resins for automobile interior and exterior parts require high flowability due to the characteristics of automobile parts that tend to be larger and lighter in weight. They are also required to have an excellent balance between rigidity and impact resistance and high elongation for the safety of vehicle occupants.

In addition, the content of volatile organic compounds (VOCs) generated from polypropylene-based resins for automobile interior and exterior parts should be low. Volatile organic compounds mainly hinge on the oligomer components contained in a highly flowable propylene-ethylene block copolymer resin among polypropylene-based resins for automobile interior and exterior parts. Such an oligomer component may be volatilized to be attached to a glass or plastic-based transparent window, which may cause a problem in that its transparency is deteriorated.

In order to improve the above problem, U.S. Patent No. 8,344,069 discloses a propylene resin composition comprising a homopolypropylene as one component, which is obtained using a single-site metallocene catalyst and has a narrow molecular weight distribution of 1.5 to 5.0. However, while this polypropylene resin composition has a small release amount of volatile organic compounds, there is a disadvantage in that the rigidity of a molded article is poor.

International Publication No. WO 2008/135483 discloses a composition for an automobile interior part comprising a polypropylene obtained in the presence of a metallocene catalyst and an elastomer. However, while this composition also has a small release amount of volatile organic compounds, there is a disadvantage in that the rigidity of a molded article is poor.

International Publication No. WO 2015/194685 discloses a composition comprising an ethylene-propylene block copolymer resin in which an ethylene-propylene rubber copolymer is dispersed in a homopolypropylene. However, while the composition has excellent rigidity since the molecular weight distribution of the homopolypropylene is wide, there is a disadvantage in that the release amount of volatile organic compounds is high.

Accordingly, there is a demand for the development of a polypropylene resin composition for automobile interior and exterior parts that has an excellent balance between rigidity and impact resistance and a small release amount of volatile organic compounds.

## Prior Art Documents

## Patent Documents

Patent Document 1: U.S. Patent No. 8,344,069
Patent Document 2: International Publication No. WO 2008/135483
Patent Document 3: International Publication No. WO 2015/194685

## Disclosure of the Invention

## Technical Problem to Solve

Accordingly, an object of the present invention is to provide a polypropylene resin composition having excellent moldability thanks to high flowability.

Another object of the present invention is to provide a propylene resin article, specifically, automobile interior and exterior parts, which is molded from the polypropylene resin composition and has an excellent balance between rigidity and impact resistance and a small release amount of volatile organic compounds.

## Solution to the Problem

According to an embodiment of the present invention to accomplish the above object, there is provided a polypropylene resin composition, which comprises an ethylene-propylene block copolymer obtained by, or obtainable by, polymerization of a propylene homopolymer or an ethylene-propylene random copolymer with an ethylene-propylene rubber copolymer in stages in reactors, wherein the ethylene-propylene block copolymer is prepared in the presence of a Ziegler-Natta catalyst based on an ether-based internal electron donor and has a melt index of 50 to 160 g/10 minutes when measured at 230°C under a load of 2.16 kg, when the ethylene-propylene block copolymer is extracted at room temperature with a xylene solvent, the ratio (XS/C2) of the content of the rubber component (or solvent extract or xylene soluble) thus extracted to the content of ethylene in the ethylene-propylene block copolymer is 2.2 to 3.3, and the polypropylene resin composition satisfies the following Relationship 1.

$$[\text{Relationship 1}]$$

$$VOC < 123 \times \log_{10}(MI) - 50$$

In Relationship 1, VOC is the content (ppm) of volatile organic compounds having 12 to 18 carbon atoms when measured by a method in which 1 g of the ethylene-propylene block copolymer is placed in a vial, sealed, and heated at 180°C for 1 hour for pretreatment, and the gas phase in the vial is then subjected to headspace-gas chromatography, and MI is the melt index (g/10 minutes) of the ethylene-propylene block copolymer, which ranges from 50 to 160 g/10 minutes.

In a specific embodiment of the present invention, the Ziegler-Natta catalyst may be prepared by reacting a dialkoxy magnesium with a titanium compound and an ether-based internal electron donor.

In a specific embodiment of the present invention, the ether-based internal electron donor may comprise an ether-based internal electron donor alone or may be a mixed internal electron donor comprising 30% by mole or more of an ether-based internal electron donor and 70% by mole or less of a non-ether-based internal electron donor.

In a specific embodiment of the present invention, the ether-based internal electron donor may comprise a 1,3-diether-based compound. More specifically, the ether-based internal electron donor may comprise at least one selected from 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-t-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(p-fluorophenyl)-1,3 -dimethoxypropane, 2-(1-decahydronaphthyl)-1,3 -dimethoxypropane, 2-(p-butylphenyl)-1,3 -dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexyl)ethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxy propane, 2,2-diphenyl-1,3-dimethoxypropane, 2,2-dibenzyl-1,3-dimethoxypropane, 2-isobutyl-2-cyclopentyl-1,3-dimethoxypropane, 2,2-bis(cyclohexylmethyl)-1,3-dimethoxypropyl, 2,2-diisobutyl- 1,3-diethoxypropane, 2,2-diisobutyl-1,3-dibutoxypropane, 2-isobutyl-2-isopropyl-1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 9,9-bis(methoxymethyl)fluorene, 9, 9-bis(methoxymethyl)-2,3,6,7-tetramethylfluorene, 9,9-bis(methoxymethyl)-2,3,4,5,6,7-hexafluorofluorene, 9,9-bis(methoxymethyl)-2,3-benzofluorene, 9,9-bis(methoxymethyl)-2,3,6,7-dibenzofluorene, 9,9-bis(methoxymethyl)-2,7-diisopropylfluorene, 9,9-bis(methoxymethyl)-1,8-dichlorofluorene, 9,9-bis(methoxymethyl)-2,7-dicyclopentylfluorene, 9,9-bis(methoxymethyl)-1,8-difluorofluorene, 9,9-bis(methoxymethyl)-1,2,3,4-tetrahydrofluorene, 9,9-bis(methoxymethyl)-1,2,3,4,5,6,7,8-octahydrofluorene, and 9,9-bis(methoxymethyl)-4-t-butylfluorene. Particularly suitably, the ether-based internal electron donor is 2-isopropyl-2-isopentyl-1,3-dimethoxypropane.

In a specific embodiment of the present invention, the non-ether-based internal electron donor may comprise a phthalate-based or succinate-based diester compound. Particularly suitably, the non-ether-based internal electron donor is a phthalate-based diester compound.

More specifically, the phthalate-based internal electron donor may comprise at least one selected from dimethyl phthalate, diethyl phthalate, dinormalpropyl phthalate, diisopropyl phthalate, dinormalbutyl phthalate, diisobutyl phthalate, dinomalpentyl phthalate, di(2-methylbutyl) phthalate, di(3-methylbutyl) phthalate, dineopentyl phthalate, dinormalhexyl phthalate, di(2-methylpentyl) phthalate, di(3-methylpentyl) phthalate, diisohexyl phthalate, dineohexyl phthalate, di(2,3-dimethylbutyl) phthalate, dinormalheptyl phthalate, di(2-methylhexyl) phthalate, di(2-ethylpentyl) phthalate, diisoheptyl phthalate, dineoheptyl phthalate, dinomaloctyl phthalate, di(2-methylheptyl) phthalate, diisooctyl phthalate, di(3-ethylhexyl) phthalate, dineohexyl phthalate, dinormalheptyl phthalate, diisoheptyl phthalate, dineoheptyl phthalate, dinomaloctyl phthalate, diisooctyl phthalate, dineooctyl phthalate, dinomalnonyl phthalate, diisononyl phthalate, dinormaldecyl phthalate, and diisodecyl phthalate. Particularly suitably, the phthalate-based internal electron donor is diisobutyl phthalate.

More specifically, the succinate-based internal electron donor may comprise at least one selected from diethyl 2,3-bis(trimethylsilyl) succinate, diethyl 2,3-bis(2-ethylbutyl) succinate, diethyl 2,3-dibenzyl succinate, diethyl 2,3-diisopropyl succinate, diisobutyl 2,3-diisopropyl succinate, diethyl 2,3-bis(cyclohexylmethyl) succinate, diethyl 2,3-diisobutyl succinate, diethyl 2,3-dineopentyl succinate, diethyl 2,3-dicyclopentyl succinate, diethyl 2,3-dicyclohexyl succinate, diethyl secondarybutyl succinate, diethyl cyclopropyl succinate, diethyl norbornyl succinate, diethyl perhydronaphthyl succinate, diethyl trimethylsilyl succinate, diethyl methoxy succinate, diethyl para-methoxyphenyl succinate, diethyl parachlorophenyl succinate, diethyl phenyl succinate, diethyl cyclohexyl succinate, diethyl benzyl succinate, diethyl (cyclohexylmethyl) succinate, diethyl tert-butyl succinate, diethyl isobutyl succinate, diethyl isopropyl succinate, diethyl neopentyl succinate, diethyl 2,2-dimethyl succinate, diethyl 2-ethyl-2-methyl succinate, diethyl 2-benzyl-2-isopropyl succinate, diethyl 2-(cyclohexylmethyl)-2-isobutyl succinate, diethyl 2-cyclopentyl-2-normal-pentyl succinate, diethyl 2,2-diisobutyl succinate, diethyl 2-cyclohexyl-2-ethyl succinate, diethyl 2-isopropyl-2-methyl succinate, diethyl 2,2-diisopropyl diethyl 2-isobutyl-2-ethyl succinate, diethyl 2-(1,1,1-trifluoro-2-propyl)-2-methyl succinate, diethyl 2-isopentyl-2-isobutyl succinate, diethyl 2-phenyl-2-normal-butyl succinate, diisobutyl 2,2-dimethyl succinate, diisobutyl 2-ethyl-2-methyl succinate, diisobutyl 2-benzyl-2-isopropyl succinate, diisobutyl 2-(cyclohexylmethyl)-2-isobutyl succinate, and diisobutyl 2-cyclopentyl-2-normal-propyl succinate.

In a specific embodiment, the ether-based internal electron donor is 2-isopropyl-2-isopentyl-1,3-dimethoxypropane, or it is a mixed internal electron donor comprising 30% by mole or more of 2-isopropyl-2-isopentyl-1,3-dimethoxypropane and 70% by mole or less of diisobutyl phthalate. Particularly suitably, the mixed electron donor comprises 40-60% by mole of 2-isopropyl-2-isopentyl-1,3-dimethoxypropane and 40-60% by mole of diisobutyl phthalate.

In a specific embodiment of the present invention, as a cocatalyst of the Ziegler-Natta catalyst, at least one alkyl aluminum compound selected from triethyl aluminum, diethylchloro aluminum, tributyl aluminum, trisisobutyl aluminum, and trioctyl aluminum may be used; and as an external electron donor, at least one organosilane compound selected from diphenyldimethoxysilane, phenyltrimethoxysilane, phenylethyldimethoxysilane, phenylmethyldimethoxysilane, methoxytrimethylsilane, isobutyltrimethoxysilane, diisobutyldimethoxysilane, diisopropyldimethoxysilane, di-t-butyldimethoxysilane, dicyclopentyldimethoxysilane, cyclohexylmethyldimethoxysilane, and dicyclohexyldimethoxysilane may be used.

In a specific embodiment of the present invention, the polypropylene resin composition may further comprise at least one additive selected from an antioxidant, a reinforcing agent, a filler, a weathering stabilizer, an antistatic agent, a lubricant, a slip agent, a nucleating agent, a flame retardant, a pigment, and a dye.

In a specific embodiment of the present invention, the polypropylene resin composition may comprise at least one antioxidant selected from the group consisting of tetrakis(3-(3,5-di-t-butyl-4-hydroxyphenyl)propionate), 1,3,5-trimethyl-tris(3,5-di-t-butyl-4-hydroxybenzyl)benzene, and tris(2,4-di-t-butylphenyl)phosphite in an amount of 0.05 to 0.5 part by weight relative to 100 parts by weight of the composition.

In a specific embodiment of the present invention, the polypropylene resin composition may comprise at least one nucleating agent selected from a mixture of aluminum hydroxybis[2,2'-methylene-bis(4,6-di-t-butylphenyl)phosphate] with sodium stearate (HPN-715 from Milliken), a mixture of cis-hexahydrophthalate compound with zinc stearate (HPN-20E from Milliken), and sodium 2,2'-methylene-bis-(4,6-di-t-butylphenyl)phosphate (CAS No. 85209-91-2; NA-11 from Adeca) in an amount of 0.01 to 1 part by weight based on 100 parts by weight of the composition.

In a specific embodiment of the present invention, the amount of volatile organic compounds having 12 to 18 carbon atoms released from the polypropylene resin composition is 150 ppm or less.

According to another embodiment of the present invention, there is provided a polypropylene resin article molded from the polypropylene resin composition.

In a specific embodiment of the present invention, the polypropylene resin article may have a flexural modulus of 16,000 kgf/cm$^2$ or more and an Izod impact strength of 5.5 kgf cm/cm or more.

In a specific embodiment of the present invention, the amount of volatile organic compounds having 12 to 18 carbon atoms released from the polypropylene resin article may be 150 ppm or less.

The polypropylene resin article according to an embodiment of the present invention may be an automobile interior or exterior part.

**Effects of the Invention**

The polypropylene resin composition according to the embodiment of the present invention is excellent in moldability since it has high flowability. In addition, the polypropylene resin article molded from the polypropylene resin composition has an excellent balance between rigidity and impact resistance and a small release amount of volatile organic compounds. Thus, it can be advantageously used as an automobile interior or exterior part.

**Brief Description of the Drawings**

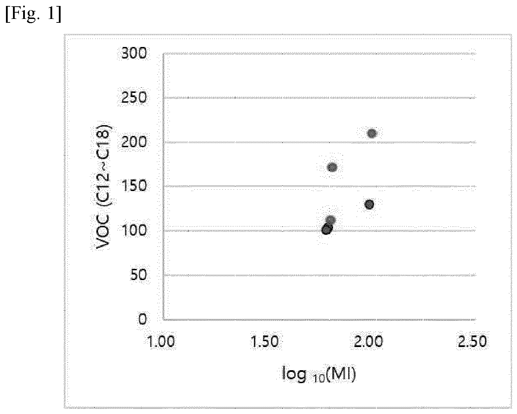

Fig. 1 is a graph showing the relationship between the melt index and VOC of the polypropylene resin compositions of the Examples (blue) and Comparative Examples (red).

**Detailed Description for Carrying out the Invention**

Hereinafter, the present invention will be described in more detail.

According to an embodiment of the present invention, there is provided a polypropylene resin composition, which comprises an ethylene-propylene block copolymer obtained by polymerization of a propylene homopolymer or an ethylene-propylene random copolymer with an ethylene-propylene rubber copolymer in stages in reactors, wherein the ethylene-propylene block copolymer is prepared in the presence of a Ziegler-Natta catalyst based on an ether-based internal electron donor and has a melt index of 50 to 160 g/10 minutes when measured at 230°C under a load of 2.16 kg, when the ethylene-propylene block copolymer is extracted at room temperature with a xylene solvent, the ratio (XS/C2) of the content of the rubber component (or solvent extract or xylene soluble) thus extracted to the content of ethylene in the ethylene-propylene block copolymer is 2.2 to 3.3, and the polypropylene resin composition satisfies the following Relationship 1.

$$[\text{Relationship 1}]$$

$$VOC < 123 \times \log_{10}(MI) - 50$$

In Relationship 1, VOC is the content (ppm) of volatile organic compounds having 12 to 18 carbon atoms when measured by a method in which 1 g of the ethylene-propylene block copolymer is placed in a vial, sealed, and heated at 180°C for 1 hour for pretreatment, and the gas phase in the vial is then subjected to headspace-gas chromatography, and MI is the melt index (g/10 minutes) of the ethylene-propylene block copolymer, which ranges from 50 to 160 g/10 minutes.

The polypropylene resin composition according to an embodiment of the present invention comprises an ethylene-propylene block copolymer resin. Here, the ethylene-propylene block copolymer resin comprises a propylene homopolymer component or an ethylene-propylene random copolymer component and an ethylene-propylene rubber copolymer component. Specifically, the ethylene-propylene block copolymer resin is obtained by polymerization of a propylene homopolymer or an ethylene-propylene random copolymer with an ethylene-propylene rubber copolymer in stages in reactors.

Here, the propylene homopolymer (or homopolypropylene) may be a polymer obtained by polymerization of a propylene monomer substantially alone.

The ethylene-propylene random copolymer may be a copolymer in which an ethylene monomer and a propylene monomer are randomly copolymerized. Typically, the content of propylene in the ethylene-propylene random copolymer may be 95% by weight or more, but it is not particularly limited to this content range.

In the polypropylene resin composition according to an embodiment of the present invention, the content of the propylene homopolymer or ethylene-propylene random copolymer component may be 70 to 95% by weight, and the content of the ethylene-propylene rubber copolymer component may be 5 to 30% by weight, based on the total weight of the ethylene-propylene block copolymer resin. Preferably, the content of the propylene homopolymer or ethylene-propylene random copolymer component may be 80 to 90% by weight, and the content of the ethylene-propylene rubber copolymer component may be 10 to 20% by weight, based on the total weight of the ethylene-propylene block copolymer resin.

If the content of the ethylene-propylene rubber copolymer component in the ethylene-propylene block copolymer resin is less than 5% by weight, the impact strength of a molded article may be deteriorated due to the low content of the rubber component. If this content exceeds 30% by weight, the flexural modulus of a molded article may be relatively deteriorated, which is not preferable. Here, the content of the ethylene-propylene rubber copolymer in the ethylene-propylene block copolymer resin may be measured as the amount of a solvent extract (or xylene soluble). Here, the solvent is preferably xylene.

In the polypropylene resin composition according to an embodiment of the present invention, the ethylene-propylene block copolymer resin has a melt index (MI) of 50 to 160 g/10 minutes, preferably 50 to 120 g/10 minutes, more preferably 50 to 100 g/10 minutes, when measured at 230°C under a load of 2.16 kg according to ASTM D1238. If the melt index is less than 50 g/10 minutes, the flowability of the resin composition would be deteriorated, so that the melted resin composition may not completely fill the mold cavity, resulting in molding defects. On the other hand, if the melt index exceeds 160 g/10 minutes, the impact resistance of a molded article at room temperature may be deteriorated.

In the polypropylene resin composition according to an embodiment of the present invention, the ratio (XS/C2) of the content (XS) of the rubber copolymer (solvent extract or xylene soluble) extracted when the ethylene-propylene block copolymer resin is extracted with a xylene solvent to the content (C2) of ethylene in the ethylene-propylene block copolymer resin is 2.2 to 3.3. If this ratio is less than 2.2, the elongation of a molded article may be low. If it exceeds 3.3, the impact resistance of a molded article at room temperature may be deteriorated.

In the polypropylene resin composition according to an embodiment of the present invention, the ethylene-propylene block copolymer resin satisfies the following Relationship 1.

[Relationship 1]

$$VOC < 123 \times \log_{10}(MI) - 50$$

In Relationship 1, VOC is the content (ppm) of volatile organic compounds having 12 to 18 carbon atoms when measured by a method in which 1 g of the ethylene-propylene block copolymer is placed in a vial, sealed, and heated at 180°C for 1 hour for pretreatment, and the gas phase in the vial is then subjected to headspace-gas chromatography, and MI is the melt index (g/10 minutes) of the ethylene-propylene block copolymer, which ranges from 50 to 160 g/10 minutes. Accordingly, the polypropylene resin composition according to an embodiment of the present invention has an excellent balance between rigidity and impact resistance and a small release amount of volatile organic compounds.

In a specific embodiment of the present invention, the amount of volatile organic compounds having 12 to 18 carbon atoms released from the polypropylene resin composition may be 150 ppm or less.

In the polypropylene resin composition according to an embodiment of the present invention, there is no particular limitation to the method of preparing the ethylene-propylene block copolymer. Any method of preparing an ethylene-propylene block copolymer known in the art to which the present invention pertains may be used as it is or as appropriately modified.

Preferably, the ethylene-propylene block copolymer resin may be prepared by a polymerization method known to those skilled in the art using a commercialized process such as LyondellBasell's Spherizone process or Mitsui's Hypol process.

The Spherizone process may be a process in which one loop-type reactor called a multizone circulating reactor (MZCR) and one gas-phase reactor are connected in series to enable continuous polymerization.

Specifically, in the MZCR reactor, propylene alone is injected to produce a propylene homopolymer, or ethylene is additionally injected thereto to produce an ethylene-propylene random copolymer. In the ensuing gas-phase reactor, ethylene and propylene may be injected to block-polymerize an ethylene-propylene rubber component, thereby obtaining the final ethylene-propylene block copolymer. The melt index of the resulting copolymer can be controlled by injecting hydrogen into each reactor.

The Hypol process may be a process in which two bulk or slurry reactors and two gas-phase reactors are connected in series to enable continuous polymerization.

Specifically, in the first- to third-stage reactors, propylene alone is injected to produce a propylene homopolymer, or ethylene is additionally injected thereto to produce an ethylene-propylene random copolymer. In the case of polymerization of an ethylene-propylene random copolymer, the same amount of ethylene may be copolymerized in each polymerization reactor. In the ensuing fourth-stage reactor, ethylene and propylene may be injected to block-polymerize an ethylene-propylene rubber component, thereby obtaining the final ethylene-propylene block copolymer. The melt index of the resulting copolymer can be controlled by injecting hydrogen into each reactor.

In the polypropylene resin composition according to an embodiment of the present invention, the ethylene-propylene block copolymer resin is prepared in the presence of a Ziegler-Natta catalyst based on an ether-based internal electron donor. In such an event, it is possible to prepare a polypropylene resin article that has an excellent balance between rigidity and impact resistance and a small release amount of volatile organic compounds.

In a specific embodiment of the present invention, the Ziegler-Natta catalyst may be prepared by reacting a dialkoxy magnesium with a titanium compound and an ether-based internal electron donor. In such an event, an ethylene-propylene block copolymer having high tacticity can be prepared.

In a specific embodiment of the present invention, the ether-based internal electron donor may comprise an ether-based internal electron donor alone or may be a mixed internal electron donor comprising 30% by mole or more of an ether-based internal electron donor and 70% by mole or less of a non-ether-based internal electron donor. Preferably, the ether-based internal electron donor may be employed in an amount of 40% by mole or more, 50% by mole or more, 60% by mole or more, 70% by mole or more, 80% by mole or more, or 90% by mole or more.

In a specific embodiment of the present invention, the ether-based internal electron donor may comprise a 1,3-diether-based compound. More specifically, the ether-based internal electron donor may comprise at least one selected from 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-t-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(p-fluorophenyl)-1,3 -dimethoxypropane, 2-(1-decahydronaphthyl)-1,3 -dimethoxypropane, 2-(p-butylphenyl)-1,3 -dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3 -diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexyl)ethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxy propane, 2,2-diphenyl- 1,3-dimethoxypropane, 2,2-dibenzyl-1,3-dimethoxypropane, 2-isobutyl-2-cyclopentyl-1,3-dimethoxypropane, 2,2-bis(cyclohexylmethyl)-1,3-dimethoxypropyl, 2,2-diisobutyl-1,3-diethoxypropane, 2,2-diisobutyl-1,3-dibutoxypropane, 2-isobutyl-2-isopropyl- 1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 9,9-bis(methoxymethyl)fluorene, 9, 9-bis(methoxymethyl)-2,3,6,7-tetramethylfluorene, 9,9-bis(methoxymethyl)-2,3,4,5,6,7-hexafluorofluorene, 9,9-bis(methoxymethyl)-2,3-benzofluorene, 9,9-bis(methoxymethyl)-2,3,6,7-dibenzofluorene, 9,9-bis(methoxymethyl)-2,7-diisopropylfluorene, 9,9-bis(methoxymethyl)-1,8-dichlorofluorene, 9,9-bis(methoxymethyl)-2,7-dicylopentylfluorene, 9,9-bis(methoxymethyl)-1,8-difluorofluorene, 9,9-bis(methoxymethyl)-1,2,3,4-tetrahydrofluorene, 9,9-bis(methoxymethyl)-1,2,3,4,5,6,7,8-octahydrofluorene, and 9,9-bis(methoxymethyl)-4-t-butylfluorene, but it is not particularly limited thereto. Particularly suitably, the ether-based internal electron donor is 2-isopropyl-2-isopentyl-1,3-dimethoxypropane.

In a specific embodiment of the present invention, the non-ether-based internal electron donor may comprise a phthalate-based or succinate-based diester compound. More specifically, the phthalate-based internal electron donor may comprise at least one selected from dimethyl phthalate, diethyl phthalate, dinormalpropyl phthalate, diisopropyl phthalate, dinormalbutyl phthalate, diisobutyl phthalate, dinomalpentyl phthalate, di(2-methylbutyl) phthalate, di(3-methylbutyl) phthalate, dineopentyl phthalate, dinormalhexyl phthalate, di(2-methylpentyl) phthalate, di(3-methylpentyl) phthalate, diisohexyl phthalate, dineohexyl phthalate, di(2,3-dimethylbutyl) phthalate, dinormalheptyl phthalate, di(2-methylhexyl) phthalate, di(2-ethylpentyl) phthalate, diisoheptyl phthalate, dineoheptyl phthalate, dinomaloctyl phthalate, di(2-methylheptyl) phthalate, diisooctyl phthalate, di(3-ethylhexyl) phthalate, dineohexyl phthalate, dinormalheptyl phthalate, diisoheptyl phthalate, dineoheptyl phthalate, dinomaloctyl phthalate, diisooctyl phthalate, dineooctyl phthalate, dinomalnonyl phthalate, diisononyl phthalate, dinormaldecyl phthalate, and diisodecyl phthalate, but it is not particularly limited thereto. Particularly suitably, the phthalate-based internal electron donor is diisobutyl phthalate.

In addition, the succinate-based internal electron donor may comprise at least one selected from diethyl 2,3-bis(trimethylsilyl) succinate, diethyl 2,3-bis(2-ethylbutyl) succinate, diethyl 2,3-dibenzyl succinate, diethyl 2,3-diisopropyl succinate, diisobutyl 2,3-diisopropyl succinate, diethyl 2,3-bis(cyclohexylmethyl) succinate, diethyl 2,3-diisobutyl succinate, diethyl 2,3-dineopentyl succinate, diethyl 2,3-dicyclopentyl succinate, diethyl 2,3-dicyclohexyl succinate, diethyl secondarybutyl succinate, diethyl cyclopropyl succinate, diethyl norbornyl succinate, diethyl perhydronaphthyl succinate, diethyl trimethylsilyl succinate, diethyl methoxy succinate, diethyl para-methoxyphenyl succinate, diethyl para-chlorophenyl succinate, diethyl phenyl succinate, diethyl cyclohexyl succinate, diethyl benzyl succinate, diethyl (cyclohexylmethyl) succinate, diethyl tert-butyl succinate, diethyl isobutyl succinate, diethyl isopropyl succinate, diethyl neopentyl succinate, diethyl 2,2-dimethyl succinate, diethyl 2-ethyl-2-methyl succinate, diethyl 2-benzyl-2-isopropyl succinate, diethyl 2-(cyclohexylmethyl)-2-isobutyl succinate, diethyl 2-cyclopentyl-2-normal-pentyl succinate, diethyl 2,2-diisobutyl succinate, diethyl 2-cyclohexyl-2-ethyl succinate, diethyl 2-isopropyl-2-methyl succinate, diethyl 2,2-diisopropyl diethyl 2-isobutyl-2-ethyl succinate, diethyl 2-(1,1,1-trifluoro-2-propyl)-2-methyl succinate, diethyl 2-isopentyl-2-isobutyl succinate, diethyl 2-phenyl-2-normal-butyl succinate, diisobutyl 2,2-dimethyl succinate, diisobutyl 2-ethyl-2-methyl succinate, diisobutyl 2-benzyl-2-isopropyl succinate, diisobutyl 2-(cyclohexylmethyl)-2-isobutyl succinate, and diisobutyl 2- cyclopentyl-2-normal-propyl succinate, but it is not particularly limited thereto.

In a specific embodiment, the ether-based internal electron donor is 2-isopropyl-2-isopentyl-1,3-dimethoxypropane, or it is a mixed internal electron donor comprising 30% by mole or more of 2-isopropyl-2-isopentyl-1,3-dimethoxypropane and 70% by mole or less of diisobutyl phthalate. Particularly suitably, the mixed electron donor comprises 40-60% by mole of 2-isopropyl-2-isopentyl-1,3-dimethoxypropane and 40-60% by mole of diisobutyl phthalate.

In a specific embodiment of the present invention, the Ziegler-Natta catalyst may be used with a cocatalyst and an external electron donor. In such an event, as a cocatalyst of the Ziegler-Natta catalyst, at least one alkyl aluminum compound selected from triethyl aluminum, diethylchloro aluminum, tributyl aluminum, trisisobutyl aluminum, and trioctyl aluminum may be used; and as an external electron donor, at least one organosilane compound selected from diphenyldimethoxysilane, phenyltrimethoxysilane, phenylethyldimethoxysilane, phenylmethyldimethoxysilane, methoxytrimethylsilane, isobutyltrimethoxysilane, diisobutyldimethoxysilane, diisopropyldimethoxysilane, di-t-butyldimethoxysilane, dicyclopentyldimethoxysilane, cyclohexylmethyldimethoxysilane, and dicyclohexyldimethoxysilane may be used, but they are not particularly limited thereto.

The polypropylene resin composition according to an embodiment of the present invention may further comprise conventional additives within a range that does not depart from the scope of the present invention. For example, the polypropylene resin composition may further comprise at least one additive selected from an antioxidant, a reinforcing agent, a filler, a weathering stabilizer, an antistatic agent, a lubricant, a slip agent, a nucleating agent, a flame retardant, a pigment, and a dye, but it is not particularly limited thereto.

In a specific embodiment of the present invention, the polypropylene resin composition may further comprise an antioxidant to increase the thermal stability thereof. In such an event, the content of the antioxidant may be 0.05 to 0.5 part by weight, preferably 0.05 to 0.2 part by weight, relative to 100 parts by weight of the polypropylene resin composition. If the content of the antioxidant is less than 0.05 part by weight, it is difficult to secure long-term thermal stability. On the other hand, if the content of the antioxidant exceeds 0.5 part by weight, the thermal stability would not be further improved, and the economic efficiency of the product may be reduced, which is not preferable.

The antioxidant may be a phenolic antioxidant, a phosphite antioxidant, or the like. Specifically, it may comprise at least one antioxidant selected from the group consisting of pentaerythritol tetrakis(3-(3,5-di-t-butyl-4-hydroxyphenyl) propionate), 1,3,5-trimethyl-tris(3,5-di-t-butyl-4-hydroxybenzyl)benzene, and tris(2,4-di-t-butylphenyl)phosphite, but it is not particularly limited thereto.

In a specific embodiment of the present invention, the polypropylene resin composition may further comprise a nucleating agent to enhance the rigidity of a molded article. In such an event, the content of the nucleating agent may be 0.01 to 1 part by weight, preferably 0.05 to 0.5 part by weight, relative to 100 parts by weight of the polypropylene resin composition. If the content of the nucleating agent is less than 0.01 part by weight, it is difficult to secure the effect of enhancing the rigidity of a molded article. On the other hand, if the content of the nucleating agent exceeds 1 part by weight, the rigidity of a molded article would not be further enhanced, and the economic efficiency of the product may be reduced.

The nucleating agent may comprise at least one selected from a mixture of aluminum hydroxybis[2,2'-methylenebis(4,6-di-t-butylphenyl)phosphate] with sodium stearate (HPN-715 from Milliken), a mixture of cis-hexahydrophthalate compound with zinc stearate (HPN-20E from Milliken), and sodium 2,2'-methylene-bis-(4,6-di-t-butylphenyl)phosphate (CAS No. 85209-91-2; NA-11 from Adeca), but it is not particularly limited thereto.

There is no particular limitation to the method for preparing the polypropylene resin composite according to an embodiment of the present invention. Any blending method known in the technical field of the present invention may be used as it is or appropriately modified.

As a specific example, the ethylene-propylene block copolymer resin and additives described above are supplied to a mixer such as a kneader, a roll, and a Banbury mixer, or a single- or twin-screw extruder in predetermined amounts, and they are then blended with this apparatus, thereby preparing the polypropylene resin composition of the present invention.

According to another embodiment of the present invention, there is provided a polypropylene resin article molded from the polypropylene resin composition.

There is no particular limitation to the method for preparing a molded article from the polypropylene resin composition according to an embodiment of the present invention. Any method known in the technical field of the present invention may be used. For example, the polypropylene resin composition according to an embodiment of the present invention may be molded by a conventional method such as injection molding, extrusion molding, casting molding, or the like to prepare a polypropylene resin article.

In a specific embodiment of the present invention, the polypropylene resin article may have a flexural modulus of 16,000 kgf/cm$^2$ or more and an Izod impact strength of 5.5 kgf cm/cm or more.

The polypropylene resin article according to an embodiment of the present invention has a small amount of volatile organic compounds released therefrom and an excellent balance between rigidity and impact resistance; thus, it can be used as an automobile interior or exterior part. In particular, when the polypropylene resin article according to an embodiment of the present invention is applied to an automobile interior part, the fogging phenomenon may be suppressed.

**Example**

Hereinafter, the present invention is explained in detail by the following examples. However, the following examples are intended to further illustrate the present invention. The scope of the present invention is not limited thereto only.

Examples 1 to 3 and Comparative Examples 1 to 3

Titanium chloride (TiCl$_4$) was supported on a magnesium chloride (MgCl$_2$) carrier. Then, as an internal electron donor, a mixed internal electron donor (50:50, molar basis) of an ether-based internal electron donor (2-isopropyl-2-(3-methylbutyl)-1,3-dimethoxypropane) and a phthalate-based internal electron donor (diisobutyl phthalate) was used (in Examples 1 and 3 and Comparative Example 1), or the ether-based internal electron donor alone was used (in Example 2), or the phthalate-based internal electron donor (diisobutyl phthalate) alone was used (in Comparative Examples 2 and 3) to prepare a catalyst. Dicyclopentyldimethoxysilane as an external electron donor and triethyl aluminum as a cocatalyst for the activation of the catalyst were added to prepare a Ziegler-Natta catalyst.

A propylene homopolymer was prepared by supplying propylene in the presence of the Ziegler-Natta catalyst prepared above in the first- to third-stage reactors in a Hypol process. The propylene homopolymer thus produced was transferred to the fourth-stage reactor, and an ethylene-propylene block copolymer was prepared by supplying ethylene and propylene to carry out a gas-phase polymerization in the presence of the Ziegler-Natta catalyst. In such an event, the melt index of the polymer produced in each polymerization reactor was adjusted by the amount of hydrogen fed to each polymerization reactor.

The composition and physical properties of the ethylene-propylene block copolymer thus prepared were measured by the following methods, and the results are shown in Tables 1 and 2 below.

(1) Melt index (g/10 minutes)

The melt index of an ethylene-propylene block copolymer was measured at 230°C under a load of 2.16 kg according to ASTM D 1238.

(2) Content of an ethylene-propylene rubber copolymer component (i.e., xylene soluble (XS); % by weight)

It was measured in accordance with the ASTM D5492. Specifically, an ethylene-propylene block copolymer resin was dissolved in xylene at a concentration of 1% by weight at 140°C for 1 hour and left at room temperature for 2 hours. The weight of the extract was then measured. The weight thus measured was expressed in percent based on the total weight of the ethylene-propylene block copolymer resin.

(3) Content of ethylene (C2; % by weight) in the ethylene-propylene block copolymer

It was measured by FT-IR in accordance with ASTM D3900.

(4) Presence or absence of an ether-based internal electron donor

The presence or absence of an ether-based internal electron donor in an ethylene-propylene block copolymer resin was confirmed through gas chromatography mass spectrometry (GC-mass).

(5) Flexural modulus

The flexural modulus was measured at 23°C in accordance with ASTM D770.

(6) Izod impact strength

The Izod impact strength was measured with a notched specimen having a thickness of 3.2 mm at 23°C according to ASTM D256.

(7) Content of volatile organic compounds (VOC)

1 g of an ethylene-propylene block copolymer (or a propylene resin composition comprising the same) was placed in a vial, sealed, and heated at 180°C for 1 hour for pretreatment. The gas phase in the vial was then subjected to headspace-gas chromatography to measure the content of volatile organic compounds. The content of volatile organic compounds was calculated from the region corresponding to 12 to 18 carbon atoms among the results of the entire analysis.

[Table 1]

| | | Example 1 | Example 2 | Example 3 |
|---|---|---|---|---|
| Polymerization conditions | Presence or absence of an ether-based internal electron donor (∘, ×) | ∘ | ∘ | ∘ |
| | Total polymerization degree (g/g) | 15 | 15 | 15 |
| | Catalyst feed rate (g/hr) | 0.46 | 0.47 | 0.45 |
| | Temp. (1st to 4th stages, °C) | 68/58/77/68 | 68/59/76/69 | 69/58/77/67 |
| | Pressure (1st to 4th stages, bar) | 34/28/17/10 | 35/27/17/11 | 35/28/17/10 |
| | Hydrogen/olefin (1st to 4th stages) | 0.05/0.08 /0.11/0.04 | 0.05/0.08 /0.11/0.04 | 0.07/0.10 /0.15/0.05 |
| Resin properties | Melt index (g/10 min.) | 62 | 61 | 98 |
| | Xylene soluble content (% by weight) | 16.2 | 16.3 | 16.1 |
| | XS/C2 | 2.6 | 2.4 | 2.5 |
| Physical properties | Flexural modulus (kgf/cm$^2$) | 16,700 | 16,500 | 16,800 |
| | Izod impact resistance at 23°C (kgf cm/cm) | 7.3 | 7.5 | 5.9 |
| | VOCs (C12-C18, ppm) | 104 | 101 | 130 |

[Table 2]

| | | Comparative Example 1 | Comparative Example 2 | Comparative Example 3 |
|---|---|---|---|---|
| Polymerization conditions | Presence or absence of an ether-based internal electron donor (∘, ×) | ∘ | × | × |
| | Total polymerization degree (g/g) | 15 | 15 | 15 |
| | Catalyst feed rate (g/hr) | 0.46 | 0.47 | 0.45 |
| | Temp. (1st to 4th stages, °C) | 68/58/76/69 | 67/59/77/69 | 69/59/77/67 |
| | Pressure (1st to 4th stages, bar) | 34/27/17/10 | 35/26/17/11 | 35/29/17/11 |
| | Hydrogen/olefin (1st to 4th stages) | 0.05/0.08/0.11/0.04 | 0.13/0.26/0.19/0.05 | 0.17/0.38/0.32/0.07 |
| Resin properties | Melt index (g/10 min.) | 64 | 65 | 101 |
| | Xylene soluble content (% by weight) | 15.8 | 15.9 | 16.0 |
| | XS/C2 | 1.6 | 2.7 | 2 |
| Physical properties | Flexural modulus (kgf/cm2) | 16,500 | 17,000 | 17,000 |
| | Izod impact resistance at 23°C (kgf cm/cm) | 5.9 | 7.0 | 4.5 |
| | VOCs (C12-C18, ppm) | 112 | 172 | 210 |

As can be seen from Tables 1 and 2 above, in the polypropylene resin compositions according to Examples 1 and 2, falling within the scope of the present invention, the molded article prepared therefrom had excellent Izod impact resistance at 23°C and a low content of VOCs.

In contrast, in the polypropylene resin composition according to Comparative Example 1 having an XS/C2 ratio less than the range of the present invention, the molded article prepared therefrom had low impact resistance.

In the polypropylene resin composition of Example 3 having a relatively high melt index than those of Examples 1 and 2, the molded article prepared from the former had relatively low Izod impact resistance and slightly higher content of VOCs than those of the molded articles of Examples 1 and 2. But it still had excellent physical properties as compared with the Comparative Examples.

In contrast, in the polypropylene resin compositions according to Comparative Examples 2 and 3, which did not use an ether-based internal electronic donor, the molded articles prepared therefrom had a relatively high content of VOCs. In particular, in the polypropylene resin composition according to Comparative Example 3 having an XS/C2 ratio less than the range of the present invention, the molded article prepared therefrom had low impact resistance.

Accordingly, the polypropylene resin compositions according to the Examples falling within the scope of the present invention are excellent in moldability since they have high flowability. In addition, the molded articles prepared from the polypropylene resin compositions have an excellent balance between rigidity and impact resistance and a small release amount of volatile organic compounds. Thus, they can be advantageously used as an automobile interior or exterior part.

## Claims

1. A polypropylene resin composition, which comprises an ethylene-propylene block copolymer obtained by polymerization of a propylene homopolymer or an ethylene-propylene random copolymer with an ethylene-propylene rubber copolymer in stages in reactors, wherein the ethylene-propylene block copolymer is prepared in the presence of a Ziegler-Natta catalyst based on an ether-based internal electron donor and has a melt index of 50 to 160 g/10 minutes when measured at 230°C under a load of 2.16 kg; when the ethylene-propylene block copolymer is extracted at room temperature with a xylene solvent, the ratio (XS/C2) of the content of the rubber component (or solvent extract or xylene soluble) thus extracted to the content of ethylene in the ethylene-propylene block copolymer is 2.2 to 3.3; and the polypropylene resin composition satisfies the following Relationship 1:

[Relationship 1]

$$VOC < 123 \times \log_{10}(MI) - 50$$

in Relationship 1, VOC is the content (ppm) of volatile organic compounds having 12 to 18 carbon atoms when measured by a method in which 1 g of the ethylene-propylene block copolymer is placed in a vial, sealed, and heated at 180°C for 1 hour for pretreatment, and the gas phase in the vial is then subjected to headspace-gas chromatography, and MI is the melt index (g/10 minutes) of the ethylene-propylene block copolymer, which ranges from 50 to 160 g/10 minutes.

2. The polypropylene resin composition of claim 1, wherein the Ziegler-Natta catalyst is prepared by reacting a dialkoxy magnesium with a titanium compound and the ether-based internal electron donor.

3. The polypropylene resin composition of claim 1 or 2, wherein the ether-based internal electron donor comprises an ether-based internal electron donor alone or is a mixed internal electron donor comprising 30% by mole or more of an ether-based internal electron donor and 70% by mole or less of a non-ether-based internal electron donor.

4. The polypropylene resin composition of any one of claims 1 to 3, wherein the ether-based internal electron donor may comprise a 1,3-diether-based compound.

5. The polypropylene resin composition of any one of claims claim 1 to 4, wherein the ether-based internal electron donor comprises at least one selected from 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-t-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(p-fluorophenyl)-1,3 -dimethoxypropane, 2-(1-decahydronaphthyl)-1,3-dimethoxypropane, 2-(p-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3 -dimethoxypropane, 2-methyl-2-methylcyclohexyl-1,3 - dimethoxypropane, 2,2-bis(p-chlorophenyl)-1,3-dimethoxypropane, 2,2-bis(2-phenylethyl)-1,3-dimethoxypropane, 2,2-bis(2-cyclohexyl)ethyl)-1,3-dimethoxypropane, 2-methyl-2-isobutyl-1,3 -dimethoxypropane, 2-methyl-2-(2-ethylhexyl)-1,3 -dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxy propane, 2,2-diphenyl-1,3-dimethoxypropane, 2,2-dibenzyl-1,3-dimethoxypropane, 2-isobutyl-2-cyclopentyl-1,3-dimethoxypropane, 2,2-bis(cyclohexylmethyl)-1,3-dimethoxypropyl, 2,2-diisobutyl-1,3-diethoxypropane, 2,2-diisobutyl- 1,3-dibutoxypropane, 2-isobutyl-2-isopropyl-1,3-dimethoxypropane, 2,2-di-sec-butyl- 1,3-dimethoxypropane, 2,2-di-t-butyl- 1,3-dimethoxypropane, 2,2-dineopentyl-1,3-dimethoxypropane, 2-isopropyl-2-isopentyl-1,3-dimethoxypropane, 2-phenyl-2-benzyl- 1,3-dimethoxypropane, 2-cyclohexyl-2-cyclohexylmethyl-1,3-dimethoxypropane, 9,9-bis(methoxymethyl)fluorene, 9, 9-bis(methoxymethyl)-2,3,6,7-tetramethylfluorene, 9,9-bis(methoxymethyl)-2,3,4,5,6,7-hexafluorofluorene, 9,9-bis(methoxymethyl)-2,3-benzofluorene, 9,9-bis(methoxymethyl)-2,3,6,7-dibenzofluorene, 9,9-bis(methoxymethyl)-2,7-diisopropylfluorene, 9,9-bis(methoxymethyl)-1,8-dichlorofluorene, 9,9-bis(methoxymethyl)-2,7-dicylopentylfluorene, 9,9-bis(methoxymethyl)-1,8-difluorofluorene, 9,9-bis(methoxymethyl)-1,2,3,4-tetrahydrofluorene, 9,9-bis(methoxymethyl)-1,2,3,4,5,6,7,8-octahydrofluorene, and 9,9-bis(methoxymethyl)-4-t-butylfluorene.

6. The polypropylene resin composition of claim 3, 4 or 5, wherein the non-ether-based internal electron donor comprises a phthalate-based or succinate-based diester compound.

7. The polypropylene resin composition of claim 6, wherein the phthalate-based internal electron donor comprises at least one selected from dimethyl phthalate, diethyl phthalate, dinormalpropyl phthalate, diisopropyl phthalate, dinormalbutyl phthalate, diisobutyl phthalate, dinomalpentyl phthalate, di(2-methylbutyl) phthalate, di(3-methylbutyl) phthalate, dineopentyl phthalate, dinormalhexyl phthalate, di(2-methylpentyl) phthalate, di(3-methylpentyl) phthalate, diisohexyl phthalate, dineohexyl phthalate, di(2,3-dimethylbutyl) phthalate, dinormalheptyl phthalate, di(2-methylhexyl) phthalate, di(2-ethylpentyl) phthalate, diisoheptyl phthalate, dineoheptyl phthalate, dinomaloctyl phthalate, di(2-methylheptyl) phthalate, diisooctyl phthalate, di(3-ethylhexyl) phthalate, dineohexyl phthalate, dinormalheptyl phthalate, diisoheptyl phthalate, dineoheptyl phthalate, dinomaloctyl phthalate, diisooctyl phthalate, dineooctyl phthalate, dinomalnonyl phthalate, diisononyl phthalate, dinormaldecyl phthalate, and diisodecyl phthalate.

8. The polypropylene resin composition of claim 6 or 7, wherein the succinate-based internal electron donor comprises at least one selected from diethyl 2,3-bis(trimethylsilyl) succinate, diethyl 2,3-bis(2-ethylbutyl) succinate, diethyl 2,3-dibenzyl succinate, diethyl 2,3-diisopropyl succinate, diisobutyl 2,3-diisopropyl succinate, diethyl 2,3-bis(cyclohexylmethyl) succinate, diethyl 2,3-diisobutyl succinate, diethyl 2,3-dineopentyl succinate, diethyl 2,3-dicyclopentyl succinate, diethyl 2,3-dicyclohexyl succinate, diethyl secondarybutyl succinate, diethyl cyclopropyl succinate, diethyl norbornyl succinate, diethyl perhydronaphthyl succinate, diethyl trimethylsilyl succinate, diethyl methoxy succinate, diethyl para-methoxyphenyl succinate, diethyl para-chlorophenyl succinate, diethyl phenyl succinate, diethyl cyclohexyl succinate, diethyl benzyl succinate, diethyl (cyclohexylmethyl) succinate, diethyl tert-butyl succinate, diethyl isobutyl succinate, diethyl isopropyl succinate, diethyl neopentyl succinate, diethyl 2,2-dimethyl succinate, diethyl 2-ethyl-2-methyl succinate, diethyl 2-benzyl-2-isopropyl succinate, diethyl 2-(cyclohexylmethyl)-2-isobutyl succinate, diethyl 2-cyclopentyl-2-normal-pentyl succinate, diethyl 2,2-diisobutyl succinate, diethyl 2-cyclohexyl-2-ethyl succinate, diethyl 2-isopropyl-2-methyl succinate, diethyl 2,2-diisopropyl diethyl 2-isobutyl-2-ethyl succinate, diethyl 2-(1,1,1-trifluoro-2-propyl)-2-methyl succinate, diethyl 2-isopentyl-2-isobutyl succinate, diethyl 2-phenyl-2-normal-butyl succinate, diisobutyl 2,2-dimethyl succinate, diisobutyl 2-ethyl-2-methyl succinate, diisobutyl 2-benzyl-2-isopropyl succinate, diisobutyl 2-(cyclohexylmethyl)-2-isobutyl succinate, and diisobutyl 2- cyclopentyl-2-normal-propyl succinate.

9. The polypropylene resin composition of any one of claims 1 to 8, wherein, as a cocatalyst of the Ziegler-Natta catalyst, at least one alkyl aluminum compound selected from triethyl aluminum, diethylchloro aluminum, tributyl aluminum, trisisobutyl aluminum, and trioctyl aluminum is used; and as an external electron donor, at least one organosilane compound selected from diphenyldimethoxysilane, phenyltrimethoxysilane, phenylethyldimethoxysilane, phenylmethyldimethoxysilane, methoxytrimethylsilane, isobutyltrimethoxysilane, diisobutyldimethoxysilane, diisopropyldimethoxysilane, di-t-butyldimethoxysilane, dicyclopentyldimethoxysilane, cyclohexylmethyldimethoxysilane, and dicyclohexyldimethoxysilane is used.

10. The polypropylene resin composition of any one of claims 1 to 9, which further comprises at least one additive selected from the group consisting of an antioxidant, a reinforcing agent, a filler, a weathering stabilizer, an antistatic agent, a lubricant, a slip agent, a nucleating agent, a flame retardant, a pigment, and a dye.

11. The polypropylene resin composition of claim 10, which further comprises at least one antioxidant selected from the group consisting of tetrakis(3-(3,5-di-t-butyl-4-hydroxyphenyl)propionate), 1,3,5-trimethyl-tris(3,5-di-t-butyl-4-hydroxybenzyl)benzene, and tris(2,4-di-t-butylphenyl)phosphite in an amount of 0.05 to 0.5 part by weight relative to 100 parts by weight of the composition.

12. The polypropylene resin composition of claim 10, which further comprises at least one nucleating agent selected from a mixture of aluminum hydroxybis[2,2'-methylene-bis(4,6-di-t-butylphenyl)phosphate] with sodium stearate (HPN-715 from Milliken), a mixture of cis-hexahydrophthalate compound with zinc stearate (HPN-20E from Milliken), and sodium 2,2'-methylene-bis-(4,6-di-t-butylphenyl)phosphate (CAS No. 85209-91-2; NA-11 from Adeca) in an amount of 0.01 to 1 part by weight relative to 100 parts by weight of the composition.

13. The polypropylene resin composition of any one of claims 1 to 12, wherein the amount of volatile organic compounds having 12 to 18 carbon atoms released from the polypropylene resin composition is 150 ppm or less.

14. A polypropylene resin article molded from the polypropylene resin composition according to any one of claims 1 to 13, optionally which is an automobile interior or exterior part.

15. The polypropylene resin article of claim 14, which has a flexural modulus of 16,000 kgf/cm$^2$ or more and an Izod impact strength of 5.5 kgf cm/cm or more when measured at 23°C.

[Fig. 1]

Europäisches
Patentamt

European
Patent Office

Office européen
des brevets

# EUROPEAN SEARCH REPORT

**Application Number**

EP 22 21 0087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 422 959 A (CHINA PETROLEUM & CHEM CORP ET AL.) 5 March 2019 (2019-03-05) * page 5, paragraph 2 * * pages 11-12; example 1 * * pages 13-14; example 1; tables 1-2 * | 1-15 | INV. C08F210/06 C08L23/12 |
| X | WO 2018/045020 A1 (GRACE W R & CO [US]) 8 March 2018 (2018-03-08) * page 17; example IE8; table 4 * * claim 32 * | 1-9,13, 14 | |
| X | WO 2016/066453 A2 (BOREALIS AG [AT]) 6 May 2016 (2016-05-06) * comparative example CE3; page 42; table 6 * * claim 17 * * page 36, lines 7-11 * | 1-14 | |

| TECHNICAL FIELDS SEARCHED (IPC) |
|---|
| C08F C08L |

The present search report has been drawn up for all claims

| Place of search | Date of completion of the search | Examiner |
|---|---|---|
| Munich | 30 March 2023 | Luka, Martin |

EPO FORM 1503 03.82 (P04C01)

## ANNEX TO THE EUROPEAN SEARCH REPORT
## ON EUROPEAN PATENT APPLICATION NO.

EP 22 21 0087

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2023

| Patent document cited in search report | | Publication date | Patent family member(s) | | Publication date |
|---|---|---|---|---|---|
| CN 109422959 | A | 05-03-2019 | NONE | | |
| WO 2018045020 | A1 | 08-03-2018 | BR | 112019003864 A2 | 18-06-2019 |
| | | | CA | 3035247 A1 | 08-03-2018 |
| | | | CN | 109843933 A | 04-06-2019 |
| | | | CN | 109843939 A | 04-06-2019 |
| | | | CN | 115160459 A | 11-10-2022 |
| | | | CO | 2019001885 A2 | 31-05-2019 |
| | | | EP | 3507311 A1 | 10-07-2019 |
| | | | EP | 3507312 A1 | 10-07-2019 |
| | | | JP | 7196074 B2 | 26-12-2022 |
| | | | JP | 2019524979 A | 05-09-2019 |
| | | | JP | 2019524980 A | 05-09-2019 |
| | | | KR | 20190057289 A | 28-05-2019 |
| | | | KR | 20190059270 A | 30-05-2019 |
| | | | RU | 2019109042 A | 01-10-2020 |
| | | | RU | 2019109043 A | 01-10-2020 |
| | | | SG | 11201901662U A | 28-03-2019 |
| | | | US | 2019194438 A1 | 27-06-2019 |
| | | | US | 2019300744 A1 | 03-10-2019 |
| | | | US | 2022119632 A1 | 21-04-2022 |
| | | | WO | 2018045020 A1 | 08-03-2018 |
| | | | WO | 2018045030 A1 | 08-03-2018 |
| WO 2016066453 | A2 | 06-05-2016 | BR | 112017003454 A2 | 05-12-2017 |
| | | | CA | 2964654 A1 | 06-05-2016 |
| | | | CN | 106795346 A | 31-05-2017 |
| | | | EP | 3212713 A2 | 06-09-2017 |
| | | | ES | 2713165 T3 | 20-05-2019 |
| | | | JP | 6370483 B2 | 08-08-2018 |
| | | | JP | 2017531721 A | 26-10-2017 |
| | | | KR | 20170048597 A | 08-05-2017 |
| | | | MX | 357096 B | 26-06-2018 |
| | | | PL | 3212713 T3 | 31-05-2019 |
| | | | US | 2017240734 A1 | 24-08-2017 |
| | | | WO | 2016066453 A2 | 06-05-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8344069 B
- WO 2008135483 A

- WO 2015194685 A

**Non-patent literature cited in the description**

- *CHEMICAL ABSTRACTS,* 85209-91-2